# EUROPEAN PATENT SPECIFICATION

(11) **EP 3 014 097 B1**
(45) Date of publication and mention of the grant of the patent: **08.08.2018**
(21) Application number: 14745002.7
(22) Date of filing: 27.06.2014
(51) Int. Cl.: F02M 35/022, F02M 35/08, B01D 45/12, B01D 45/18, B01D 50/00, F02M 35/02, F02M 35/04, F02M 35/024

(54) **AIR INTAKE ARRANGEMENT FOR ENGINE**
LUFTEINLASSANORDNUNG FÜR MOTOR
CONFIGURATION DE PRISE D'AIR POUR MOTEUR

(30) Priority: 28.06.2013 CN 201320379959 U; 28.06.2013 CN 201310266320; 15.10.2013 US 201361891210 P
(43) Date of publication of application: 04.05.2016
(73) Proprietor: Donaldson Company, Inc., Minneapolis, MN 55440-1299 (US)
(72) Inventor: GEHLHOFF, Wade, Shakopee, MN 55379 (US); GIESEKE, Steven, Richfield, MN 55423 (US); ZHOU, Wenliang, Mineapolis, MN 55440-1299 (US); LI, Michael, Wuxi City Jiangsu Province 214131 (CN); HUA, Gao, Aaron, Wuxi City Jiangsu Province 214192 (CN)
(74) Representative: Eisenführ Speiser
(86) International application number: PCT/US2014/044704
(87) International publication number: WO 2014/210534

(56) References cited:
- EP-A1- 1 731 749
- EP-A2- 1 950 407
- GB-A- 2 061 774
- GB-A- 2 433 220
- US-A- 4 537 608

## Description

### Technical Field

The present disclosure involves an air intake arrangement for an engine, particularly a vehicle engine intake system with a pre-cleaner.

### Background

Internal combustion engines need air for the combustion process. The performance of an air intake system impacts the performance and life of an engine. An air filter usually needs to be installed in front of an intake tube of an engine. The air filter filters out dust, debris, particulate, and other impurities in the air to ensure that sufficient clean air enters into the engine.

In a dusty working environment, in order to reduce the workload of an air filter and improve the service life of an air filter, a pre-filter device can be used upstream of the air filter to preliminarily filter the intake. In many systems, dust collected by the pre-filter is automatically ejected from the pre-filter device for the purpose of improving the pre-filtering effect.

In other systems, the efficiency of the pre-cleaner is improved by pulling the air through the pre-cleaner using a blower or vacuum source. The blower, however, also pulls the dust and particulate through its parts, which leads to wear of the blower. Known air intake arrangements are for example disclosed in GB 2 061 774 A.

Improvements in air intake systems are desirable. An air intake arrangement according to the present invention is claimed in independent claim 1.

### Summary

An air intake arrangement for an air intake system for an engine is provided.
The air intake arrangement includes a first pre-cleaner arrangement having a housing with an air flow inlet to receive air to be pre-cleaned. A pre-cleaner region is constructed and arranged to remove at least some particulate from the inlet air. The first pre-cleaner arrangement further includes a vacuum flow path and a drop tube flow path. The vacuum flow path is in air flow communication with a first vacuum source to selectively put a vacuum draw through the pre-cleaner region. The drop tube flow path is in air flow communication with a drop tube to eject particulate removed from the inlet air by the pre-cleaner region.

In some aspects, there can be a T-connection providing air flow communication between the vacuum flow path and the drop tube flow path.

In some aspects the first vacuum source includes an electric blower, or a hydraulically powered vacuum source, or a belt-driven blower, or a blower powered by a power takeoff or camshaft.

In some aspects, there is a second vacuum source in air flow communication with the drop tube to put a vacuum draw through the drop tube.

In some aspects, there is a second pre-cleaner arrangement in the vacuum flow path upstream of the first vacuum source.

In some aspects, there is a vacuum source in air flow communication with the second pre-cleaner.

In some aspects, the first vacuum source is controlled by a controlling device. The controlling device can be based on a gear of a vehicle having the air intake arrangement; or based on a speed of a vehicle having the air intake arrangement; or based on an engine load of an engine having the air intake arrangement; or based on an engine speed of an engine having the air intake arrangement; or based on dust concentration in the air intake arrangement.

In some aspects, the first vacuum source is connected to the first pre-cleaner arrangement through one or more ports.

In some aspects, the pre-cleaner region includes a plurality of inertial particle separation tubes.

The housing can be integral with a primary air cleaner.

The housing can be separate and upstream of a primary air cleaner.

In a further aspect, an air intake arrangement for an air intake system for an engine includes a first pre-cleaner arrangement having a housing with an airflow inlet to receive air to be pre-cleaned; a pre-cleaner region constructed and arranged to remove at least some particulate from the inlet air; the first pre-cleaner arrangement further including a vacuum flow path and a drop tube flow path; the vacuum flow path being in airflow communication with a first vacuum source to selectively put a vacuum draw through the pre-cleaner region; and wherein the first vacuum source is controlled by a controlling device.

The controlling device can control the first vacuum source based on a gear of a vehicle having the air intake arrangement.

The controlling device can control the first vacuum source based on a speed of a vehicle having the air intake arrangement.

The controlling device can control the first vacuum source based on an engine load of an engine having the air intake arrangement.

The controlling device can control the first vacuum source based on an engine speed of an engine having the air intake arrangement.

The controlling device can control the first vacuum source based on dust concentration in the air intake arrangement.

A sensor can be provided to measure the dust concentration.

In a further aspect, an air intake arrangement for an air intake system for an engine includes a first pre-cleaner arrangement having a housing with an airflow inlet to receive air to be pre-cleaned; a pre-cleaner region constructed and arranged to remove at least some particulate from the inlet air; the first pre-cleaner arrangement further including a vacuum flow path and a drop tube flow path; the vacuum flow path being in airflow communication with a first vacuum source to selectively put a vacuum draw through the pre-cleaner region; and a second pre-cleaner arrangement in the vacuum flow path upstream of the first vacuum source.

A second vacuum source may be provided in airflow communication with the second pre-cleaner.

A method of pre-filtering air for an air intake system of an engine is provided. The method includes drawing air into an inlet of a first pre-cleaner arrangement. The first pre-cleaner arrangement can have a vacuum flow path in flow communication with a first vacuum source, and a drop tube flow path in flow communication with a drop tube. The method can include removing at least some particulate from the drawn in air using a pre-cleaner region of the first pre-cleaner arrangement. The method can also include allowing air with the removed particulate to flow in at least one of the vacuum flow path or drop tube flow path until exhausted from the system.

### Brief Description of the Drawings

FIGS. 1-14 are schematic diagrams depicting embodiments of air intake arrangements, constructed in accordance with principles of this disclosure but not falling under the scope of the claims;
FIG. 15 is a side view of an embodiment of an air intake arrangement, constructed in accordance with principles of this disclosure;
FIG. 16 is a front view of the air intake arrangement of FIG. 15;
FIG. 17 is an exploded perspective view of the air intake arrangement of FIG. 15;
FIG. 18 is an enlarged view of Section A from FIG. 15
FIG. 19 is an enlarged view of Section B from FIG. 16;
FIG. 20 is a cross-sectional view of one example inertial particle separation tube that can be used in pre-cleaners of the preceding arrangements;
FIG. 21 is a side view, partially in cross-section, of one example blower utilized in systems of the preceding arrangements;
FIGS. 22 and 23 are schematic diagrams depicting embodiments of air intake arrangements, constructed in accordance with principles of this disclosure but not falling under the scope of the claims; and
FIGS. 24-27 are graphs depicting fan drive level versus various engine characteristics.

### Detailed Description

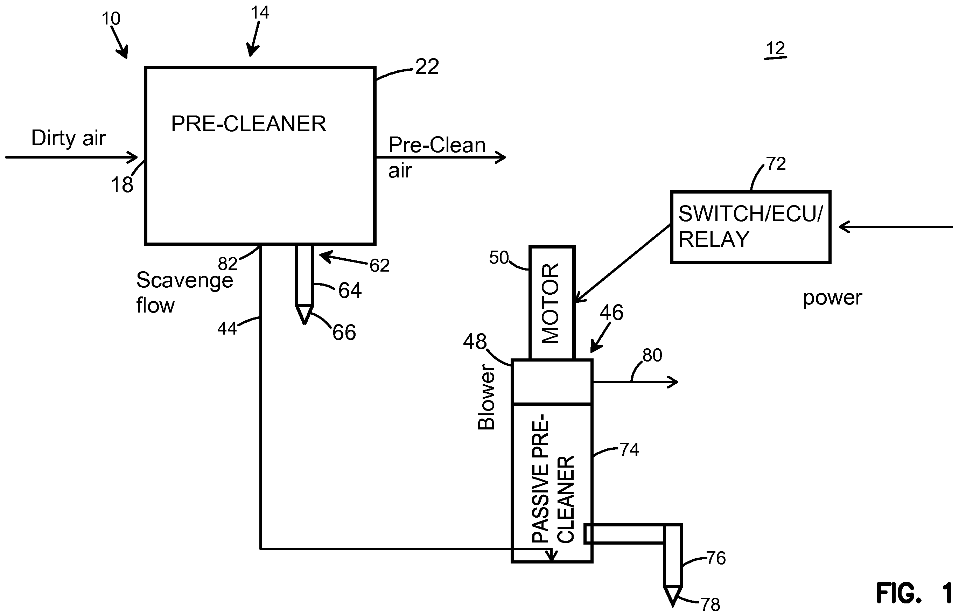

In FIG. 1, an air intake arrangement is shown generally at 10. The air intake arrangement 10 is used in an air intake system 12 for an internal combustion engine. The engine can be part of a vehicle, including for example vehicles used in off-road environments.

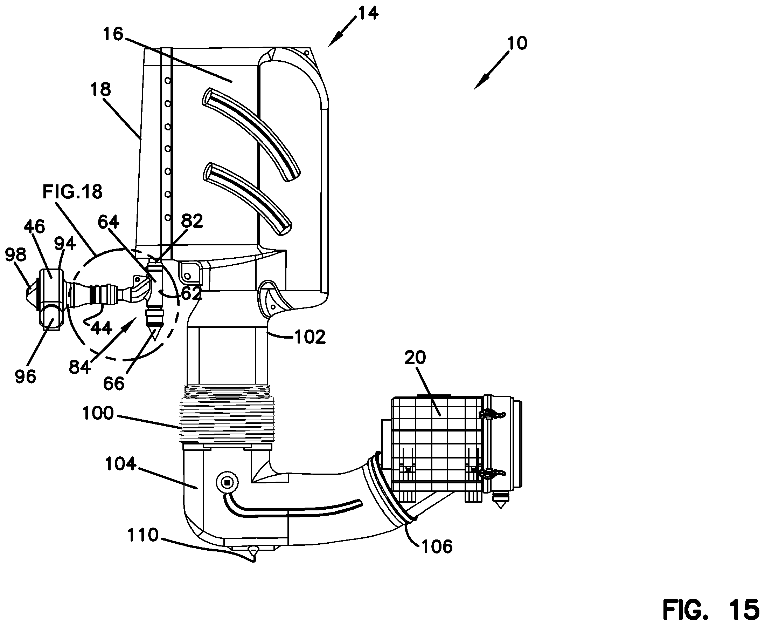

The air intake arrangement 10 includes a first pre-cleaner arrangement 14. The pre-cleaner arrangement 14 will typically have a housing 16 (FIG. 15) with an air flow inlet 18. The air flow inlet 18 will receive air to be pre-cleaned. Eventually, the air received through the air flow inlet 18 flows through an air cleaner 20 (FIG. 15), and then is conveyed into the engine for combustion purposes.

The first pre-cleaner arrangement 14 includes a pre-cleaner region 22. The pre-cleaner region 22 is constructed and arranged to remove at least some particulate from the inlet air. The particulate can include dust, debris, etc. from the inlet air.

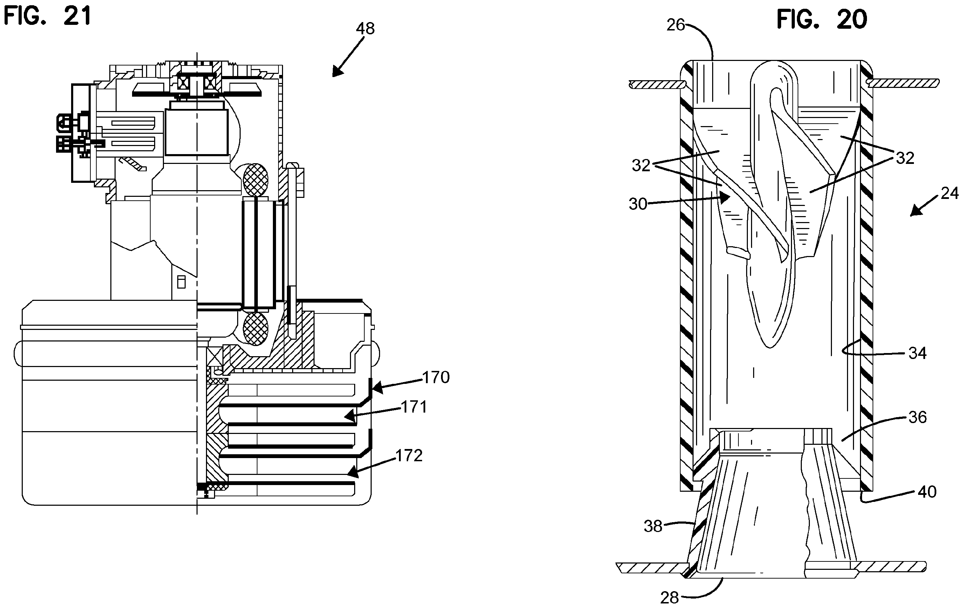

Many different types of pre-cleaner regions 22 can be used. In one example, the pre-cleaner region 22 includes a plurality of inertial particle separation tubes 24 (FIG. 20). The inertial particle separation tubes 24 used as part of the precleaner region 22 can be constructed in accordance with U.S. Patent 4,242,115. In general, the inertial particle separation tube 24 includes an inlet end 26 and an outlet end 28. Between the inlet end 26 and outlet end 28 is a vane construction 30 including a plurality of curved vanes 32. As air passes downwardly from the inlet end 26, the vane construction 30 produces a swilling motion, causing air or fluid stream to rotate in a spiral fashion as it continues in its passage through the tube 24. As the air swirls, the larger dirt particles or other heavy materials are thrown outwardly against an inner wall surface 34 of the tube 24. The dirt particles pass through a gap 36 between the tube 24 and inner tube 38. The clean fluid or air at the center of the tube 24 passes downwardly and out through the center of the inner tube 38 and then through the outlet end 28. The dirt that falls through the gap 36 then drops through the scavenge outlet 40.

In reference again to FIG. 1, the first pre-cleaner arrangement 14 includes a vacuum flow path 44. The vacuum flow path 44 is in air flow communication with a first vacuum source 46. The vacuum source 46 will put a vacuum draw in the flow path 44 and through the pre-cleaner region 22. This vacuum draw will help to pull inlet air into the first pre-cleaner arrangement 14 and through the pre-cleaner region 22.

The first vacuum source 46 can be embodied in a number of different ways. For example, the first vacuum source 46 can be an electric blower 48. The blower 48 includes a motor 50.

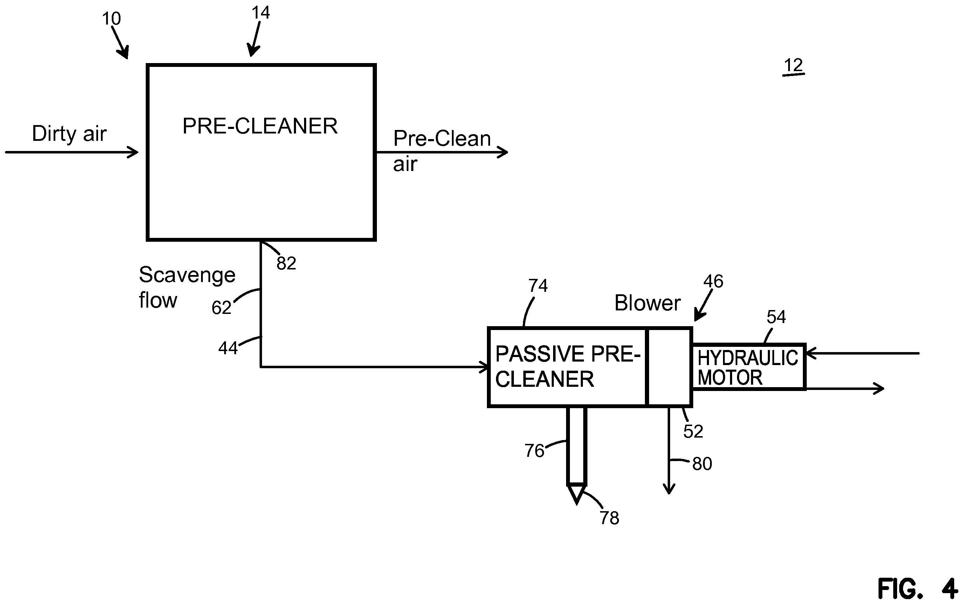

The first vacuum source 46 may be a hydraulically powered vacuum source 52 (FIG. 4). In that embodiment, the hydraulically powered vacuum source 52 is powered by a hydraulic motor 54.

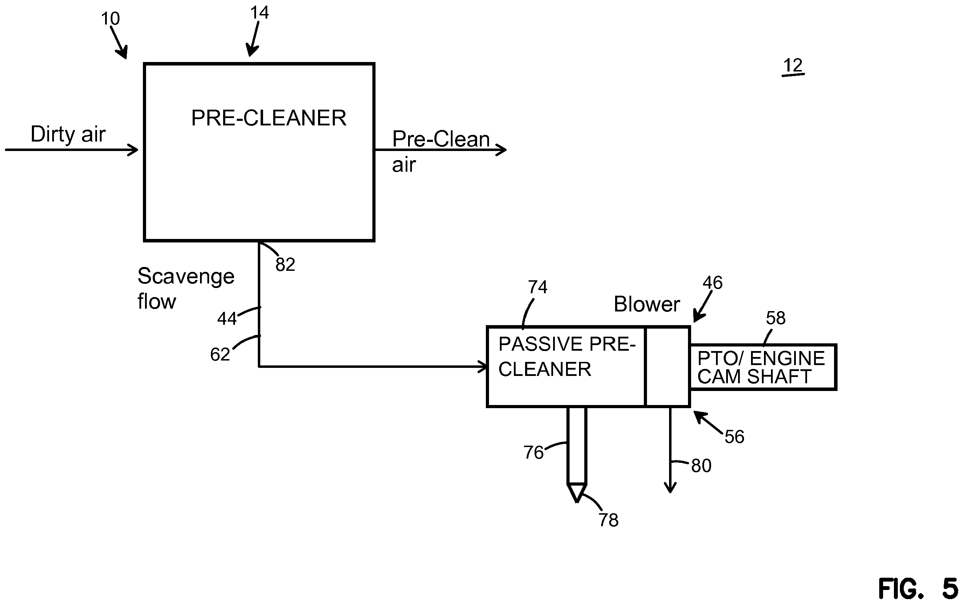

In FIG. 5, the blower 56 is powered by the power takeoff (PTO) of an engine cam shaft 58.

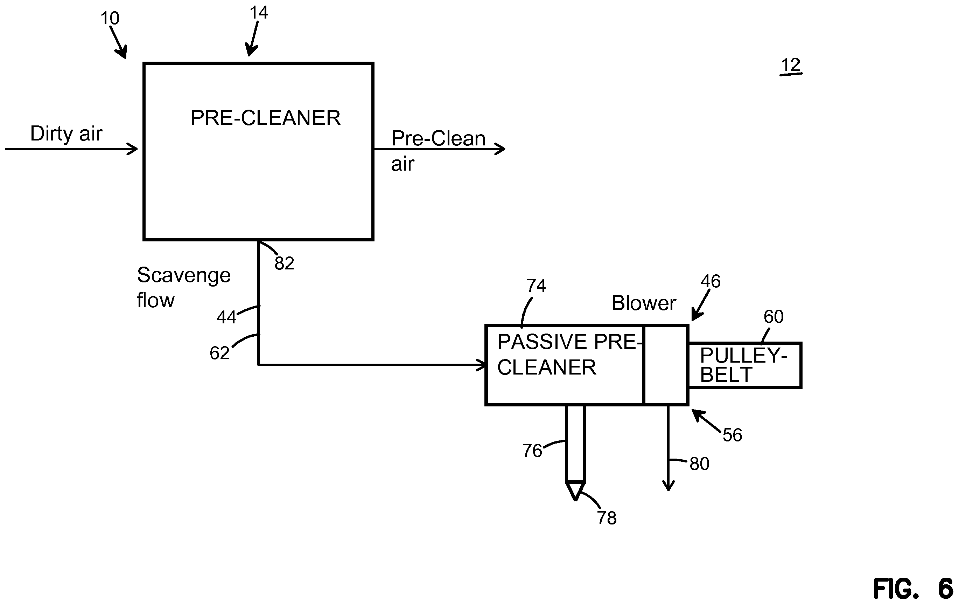

The first vacuum source 46 can also be a belt-driven blower 56 (FIG. 6). In FIG. 6, the belt-driven blower 56 is powered by a pulley or belt 60.

In reference again to FIG. 1, the first pre-cleaner arrangement 14 further includes a drop tube flow path 62. The drop tube flow path 62 is in air flow communication with a drop tube 64. The drop tube 64 typically includes a valve 66 at the end of the drop tube 64, so that after a certain amount of dust or particulate builds up in the drop tube 64, it is ejected through the valve 66.

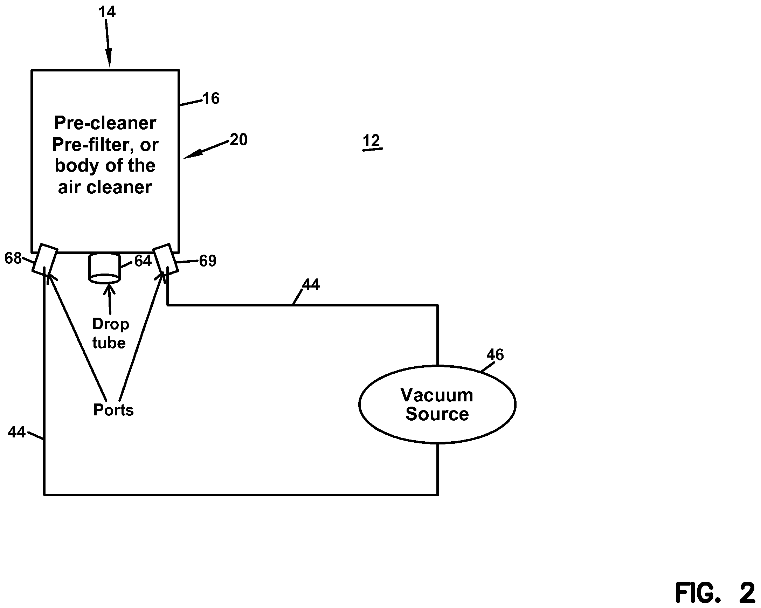

In the embodiments shown in FIGS. 1 and 2, the drop tube flow path 62 and the vacuum flow path 44 are connected to separate ports in the first pre-cleaner arrangement 14. In FIG. 2, there are two ports 68, 69 both connected to the first vacuum source 46. The drop tube 64 is connected to a separate port from the ports 68, 69. In other embodiments, such as FIG. 15 to be discussed further below, the vacuum flow path 44 and drop tube flow path 62 are in connection with a common port in the first pre-cleaner arrangement 14.

In FIG. 1, the motor 50 powers electric blower 48. A switch 72 can be used to selectively provide power to the motor 50. In some applications, it may be desired to run the first pre-cleaner arrangement 14 without the draw of the first vacuum source 46. In those instances, the power will be switched off by switch 72, and the dust or particulate removed by the pre-cleaner region 22 will drop by gravity through the drop tube flow path 62 into the drop tube 64.

Still in reference to FIG. 1, in the system 12 depicted, there is a second pre-cleaner arrangement 74. In the embodiment shown, the second pre-cleaner arrangement 74 is in the vacuum flow path 44 upstream of the first vacuum source 46. In this way, the second pre-cleaner arrangement 74 protects the motor 50 from the dust and debris removed from the intake air by the first pre-cleaner arrangement 14.

Many different embodiments of the second pre-cleaner arrangement 74 are possible. In one example, the second pre-cleaner arrangement 74 will include a plurality of inertial particle separation tubes, such as the tubes 24 depicted in FIG. 20 and described above. The second pre-cleaner arrangement 74 includes a drop tube 76 having valve 78. The drop tube 76 will collect the particulate removed from the air by the second pre-cleaner arrangement 74 and ejected through the second drop tube 76 through the valve 78. The exhausted scavenge flow is blown through the blower 48 at 80.

Attention is directed to the embodiment of FIGS. 15-18. In this embodiment, the vacuum flow path 44 and drop tube flow path 62 originate from a single port 82 from the pre-cleaner housing 16. There is a T-connection 84 providing air flow communication between the vacuum flow path 44 and the drop tube flow path 62.

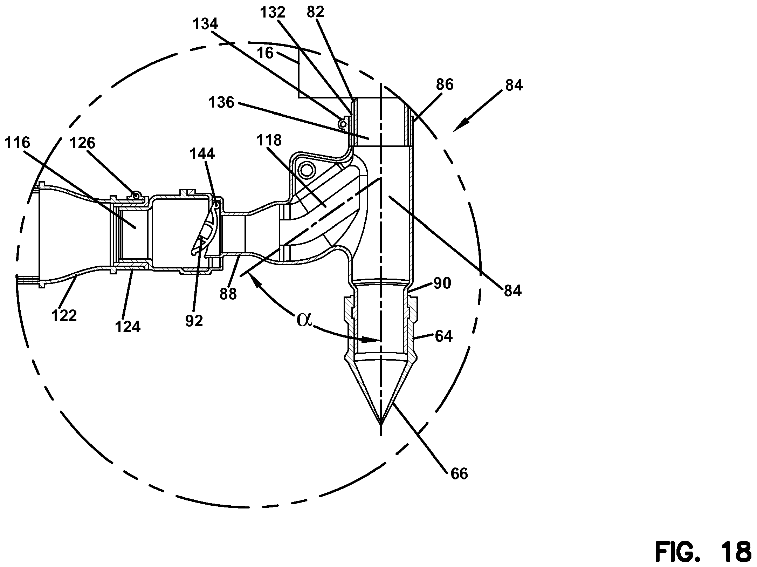

Attention is directed to FIG. 18. The T-connection 84 includes a first leg 86, an intersecting second leg 88, and a third leg 90. The first leg 86 and third leg 90 are on opposite sides of the intersecting second leg 88. Although in this embodiment, there is approximately a right angle between the second leg 88 and first leg 86, as well as between the second leg 88 and third leg 90, right angles are not required. A variety of ranges of angles can be between the second leg 88 and first leg 86, and between the second leg 88 and third leg 90. In FIG. 18, the angle between the second leg 88 and third leg 90 is shown at the letter a.

The first leg 86 is located between the pre-cleaner housing 16 and the second leg 88. The second leg 88 is connected to the first vacuum source 46 (FIG. 15). The third leg 90 is connected to the drop tube 64.

In this embodiment, the third leg 90 is longer than the first leg 86. This is because it is desirable to have the dust ejection valve 66 open to eject dust before a check valve 92 opens in the second leg 88 leading to the first vacuum source 46.

In this embodiment, there are advantages to having the drop tube 64 arranged to be at least at the same vertical position as the first vacuum source 46. Preferably, the drop tube 64 will be at a lower vertical position than the first vacuum source 46. This is advantageous to avoid having the first vacuum source 46 packed with dust and not be operative when the first vacuum source 46 is started. That is, when the drop tube 64 is lower than the first vacuum source 46, then the drop tube 64 will fill up with dust for ejection before the vacuum flow path 44 fills with dust.

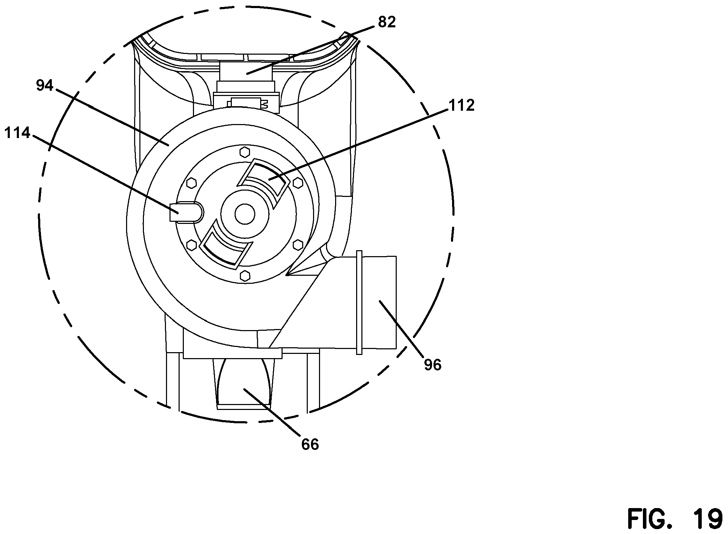

In the embodiment of FIGS. 15-19, the first vacuum source 46 is embodied as a blower or fan 94. The fan 94 has an outlet 96. A cover 98 is secured to the fan 94 to protect the fan 94 from water and other dust.

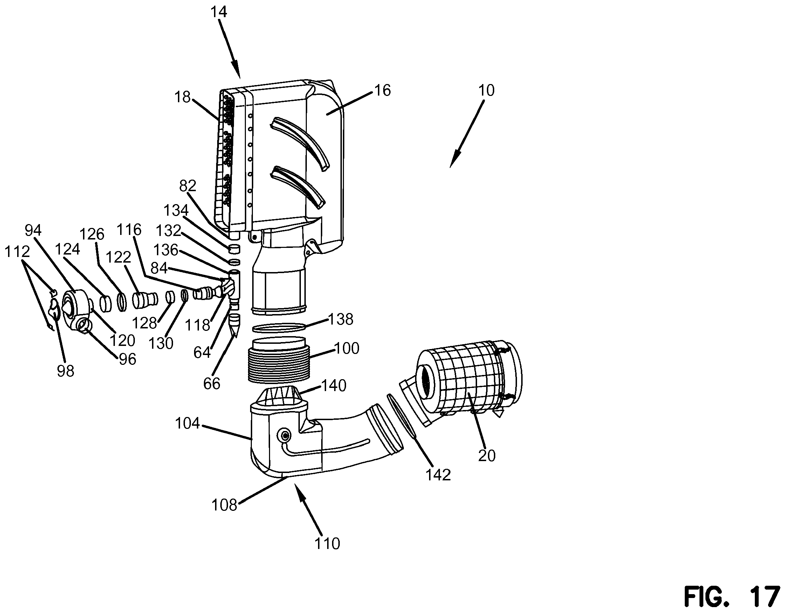

In reference to FIG. 15, a corrugated tube 100 connects an air outlet 102 of the housing 16 of the first pre-cleaner arrangement 14 to the air cleaner 20. In this embodiment, an elbow 104 is between the corrugated tube 100 and the inlet 106 of the air cleaner 20. A drain 108 (FIG. 17) is at the bottom of the transition elbow 104 and is connected to a drain valve 110.

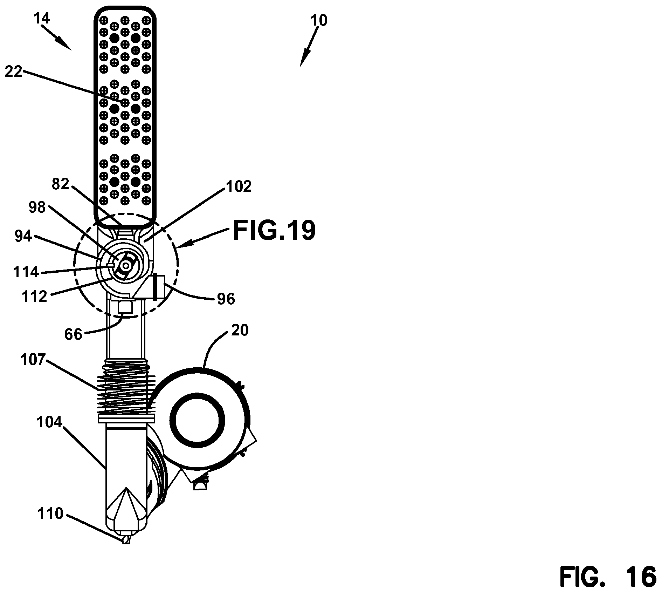

In reference now to FIG. 16, in this embodiment, a plurality of holes are set on the cover 98 for installation of filter cartridges 112. The filter cartridges 112 can be waterproof and breathable cartridges. In addition, the cartridges 112 can provide heat vents for the fan 94. A plurality of holes 114 are also on the cover 98 for accommodating a power cord of the fan 94.

In FIG. 17, an exploded view of the air intake arrangement 10 of FIG. 15 is depicted. The T-connection 84 includes an outlet at the drop tube 64. This is connected to the dust discharge valve 66. Thus, when the fan 94 is not working, the first pre-cleaner arrangement 14 can still discharge dust through the drop tube 64 and dust ejection valve 66. The T-connection 84 is connected to an outlet 116 by way of a transition tube 118. The angle a between the axis of the transition tube 118 and the drop tube 64 is less than or equal to 90 degrees, to ensure that dust at the dust outlet port 82 may be more smoothly drawn into the fan 94.

When the diameters of the air inlet 120 of the fan 94 and the outlet 116 are of a different size, an adjustable connector 122 is used. Also depicted in FIG, 17 are an O-ring 124 and a clamp 126 between the connector 122 and the fan 94. Similarly, an O-ring 128 and clamp 130 are depicted between the connector 122 and the tube 118. Similarly, an O-ring 132 and clamp 134 is used between the port 82 and an inlet end 136 of the T-connection 84.

In FIG. 17, certain other structural features of the overall arrangement 10 can be seen. For example, a clamp 138 can be seen securing the housing 16 to the corrugated tube 100. A corrugated centralizer 140 is used to help center the connection between the elbow 104 and corrugated tube 100. A clamp 142 is used to connect the elbow 104 to the air cleaner 20.

In FIG. 18, the check valve 92 can be seen operably positioned in the second leg 88 of the T-connection 84. There can be many different embodiments, and in the one shown, the check valve 92 is connected to the T-connection 84 through a retaining pin 144. The opening direction of the valve 92 is the same direction as the intake direction of the fan 94 for controlling the opening and closing of the vacuum flow path 44 and pipeline between the T-connection 84 and the fan 94.

To operate the air intake arrangement 10 of FIGS. 15-19, air is drawn in through the air flow inlet 18 and into the pre-cleaner region 22. The fan 94 is turned on, and the check valve 92 in the T-connection 84 is opened by action of the fan 94. Negative pressure is generated at the port 82, so that the preliminarily filtered dust is sucked to the fan 94 by way of the T-connection 84. Then, the fan 94 discharges dust from its air outlet 96. Thus, air entering into the air cleaner 20 is air that has been prefiltered.

When the fan 94 is not working or is not powered up, the check valve 92 is closed. The port 82 is not then connected to the air inlet 120 of the fan 94. Dust preliminarily filtered by the pre-cleaner region 22 is discharged from the port 82, into the T-connection 84, into the drop tube 64, and then through the discharge valve 66.

When the fan 94 is not working or powered up, the first pre-cleaner arrangement 14 can reach 80%, compared to the pre-filtering effect of dust ejection by the fan 94, which may reach 96%. The intake arrangement 10 improves filtering efficiency of the first pre-cleaner arrangement 14 and thus can prolong the service life of the air cleaner 20 and reduce maintenance costs.

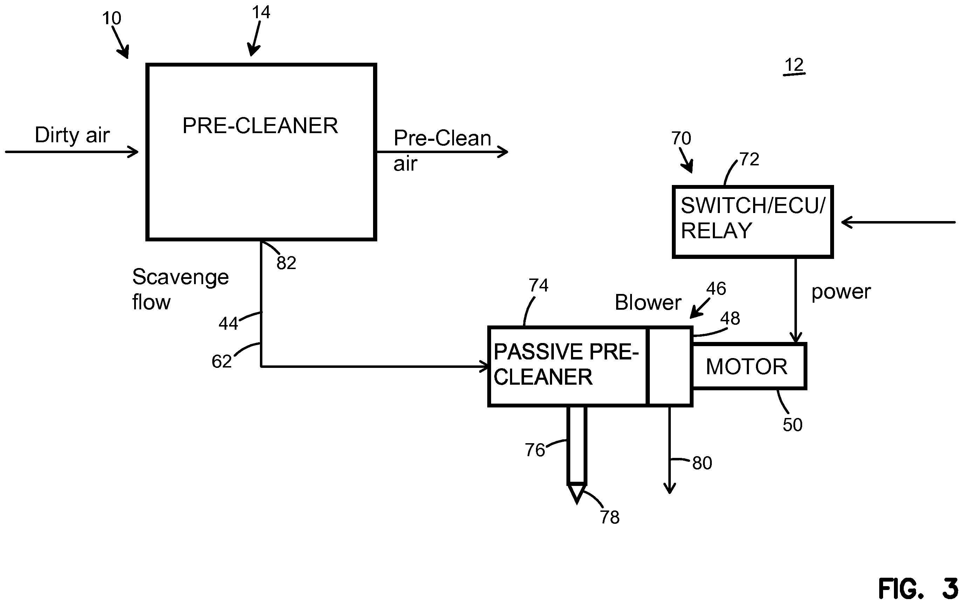

Turning again to the system 12, in the system 12 of FIG. 3, there is a single dust port 82 for both the vacuum flow path 44 and drop tube flow path 62. In the embodiment of FIG. 3, the scavenged air leads the first pre-cleaner arrangement 14 through the dust port 82 and travels along path 44 and 62. It is drawn through the paths 44, 62 by way of the first vacuum source 46. Before being exhausted through the scavenge flow outlet 80 of the first vacuum source 46, the air is drawn through the second pre-cleaner arrangement 74. The second pre-cleaner arrangement 74 removes particulate, dust, and debris, where it falls by gravity into the drop tube 76.

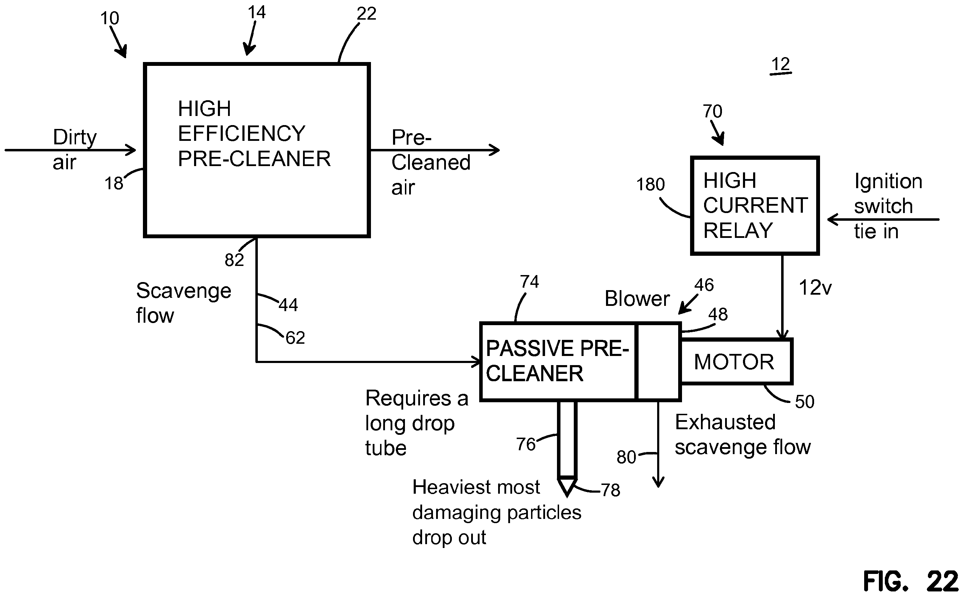

In FIG. 22, the system 12 is similar to the system 12 of FIG. 3, but it shows the use of a high current relay 180 as part of the controlling device 70. The high current relay 180 is tied in with an ignition switch.

In FIG. 4, the system 12 is the same as the system 12 of FIG. 3, but shows use of hydraulically powered motor 54.

In FIG. 5, the power is shown as the power takeoff (PTO) or engine, or cam shaft 58.

In FIG. 6, again the system 12 is similar as the systems 12 of FIGS. 3-5, except that the power for the first vacuum source 46 is shown as a pulley or belt 60.

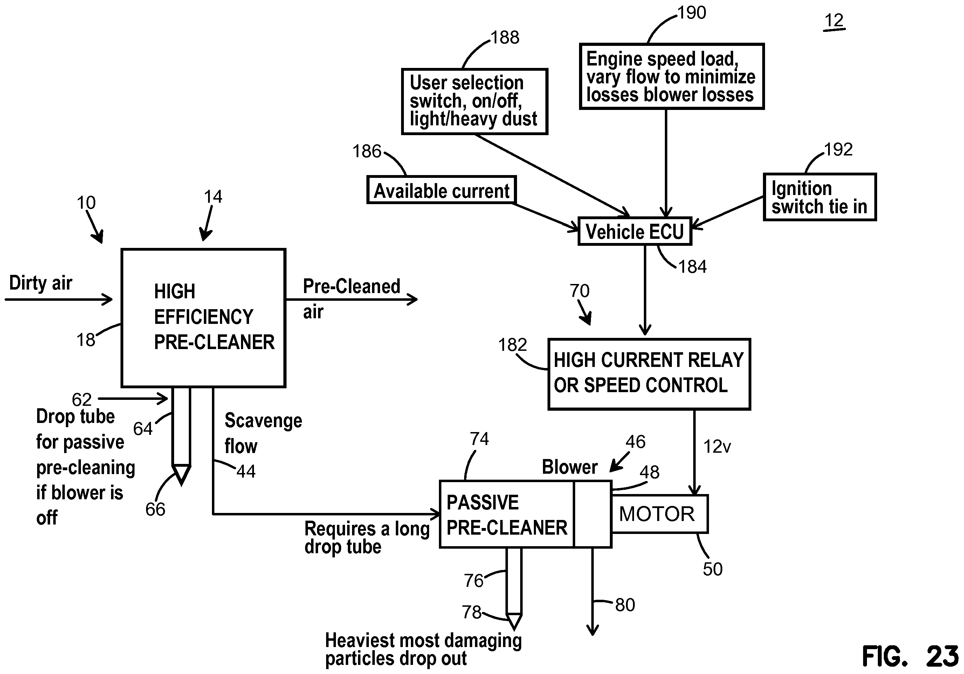

In FIG. 23, the system 12 is similar to the systems 12 of FIGS. 1, 3, and 22, except that the controlling device 70 uses a high current relay or speed control 182. The high current relay or speed control 182 receives input (signals) from the vehicle ECU 184. The vehicle ECU receives input (signals) from a variety of sources including available current 186; user selection switch 188 such as "on/off' or "light/heavy dust"; engine speed load 190 which will vary flow to minimize blower losses; and ignition switch tie in 192.

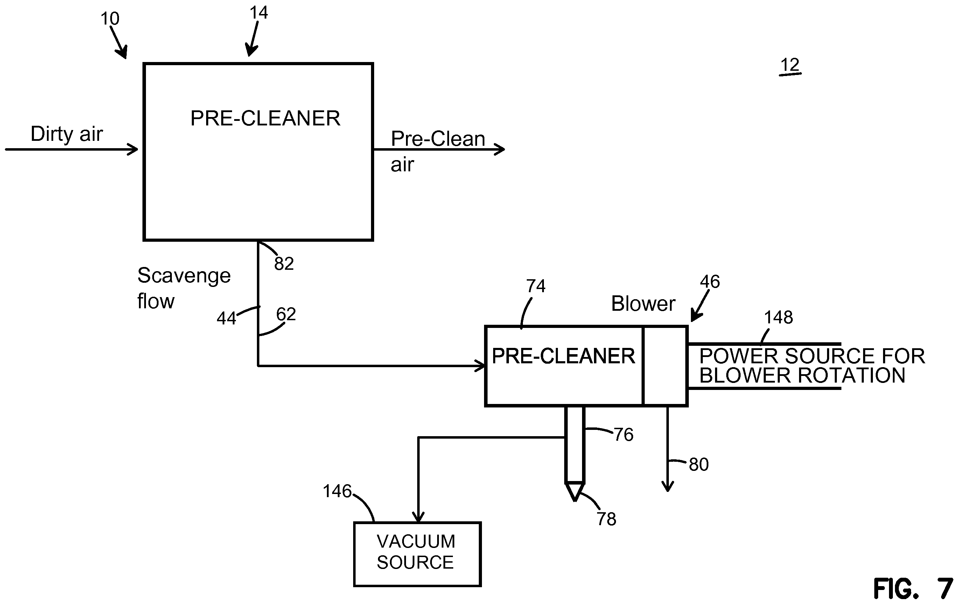

In some systems, the air intake arrangement 10 may further include a second vacuum source 146 (FIG. 7). The second vacuum source 146 can be in air flow communication with the drop tube 76 to put a vacuum draw through the drop tube 76. Also shown in FIG. 7 is a generic power source 148 for the first vacuum source 46. The power source 148 can be any of the types discussed above including, for example, an electric motor, hydraulically powered, belt-driven, power takeoff, etc.

The second vacuum source 146 can be powered by any of the techniques described above. For example, the second vacuum source 146 can be powered hydraulically, or it can be belt-driven, or it can be electrically powered, or it can rely on the power takeoff.

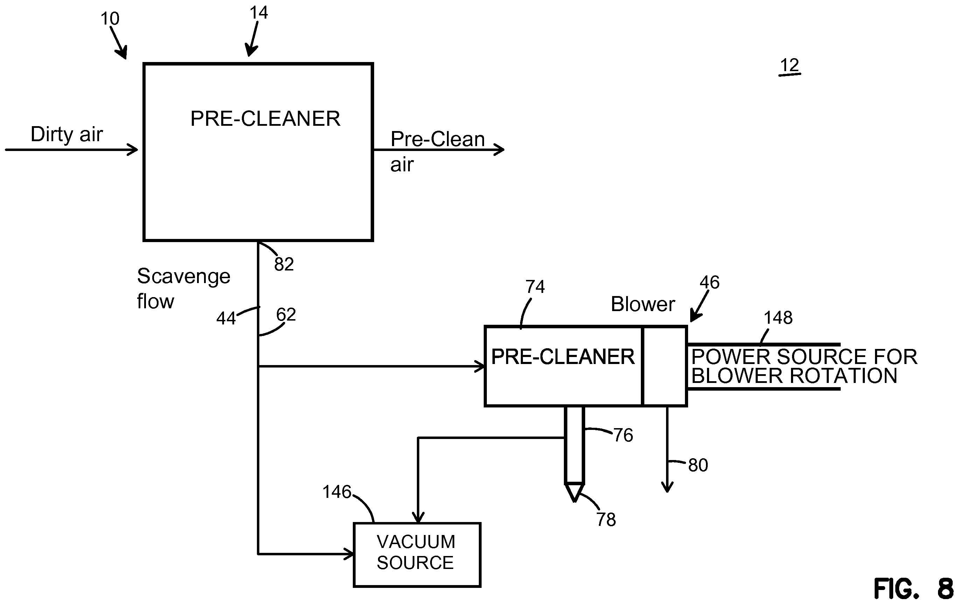

In the embodiment of FIG. 8, the second vacuum source 146 operates to put a draw on both the first pre-cleaner arrangement 14 and the second pre-cleaner arrangement 74. Specifically, in the arrangement of FIG. 8, the second vacuum source 146 is in air flow communication with the vacuum flow path 44 and drop tube flow path 62. It is also downstream of the second pre-cleaner arrangement 74 to put a draw through the drop tube 76 of the second pre-cleaner 74.

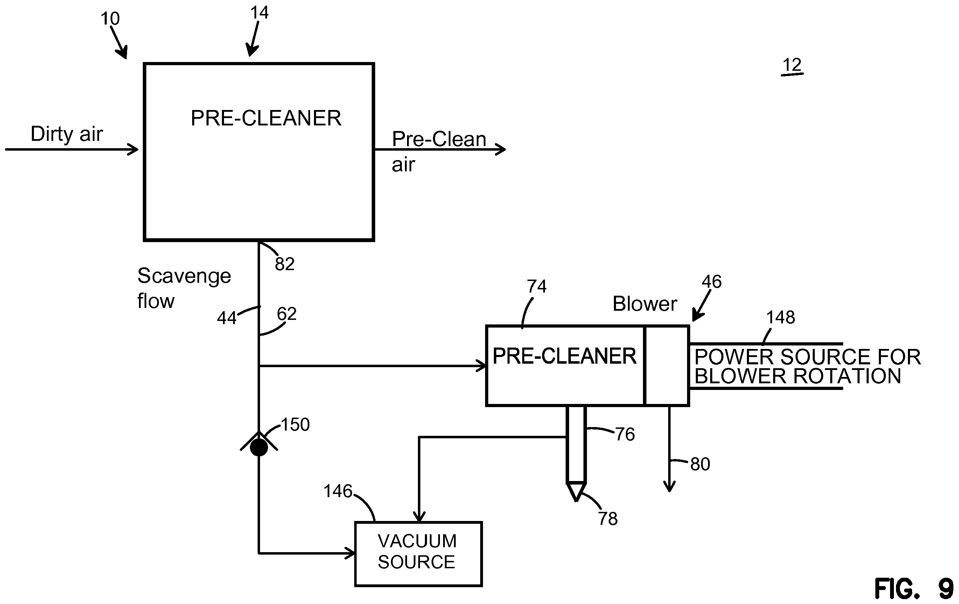

The system of FIG. 8 can also include a check valve 150, as shown in FIG 9. The check valve 150 is located between the first pre-cleaner arrangement 14 and the second vacuum source 146. The check valve 150 prevents unwanted backflow.

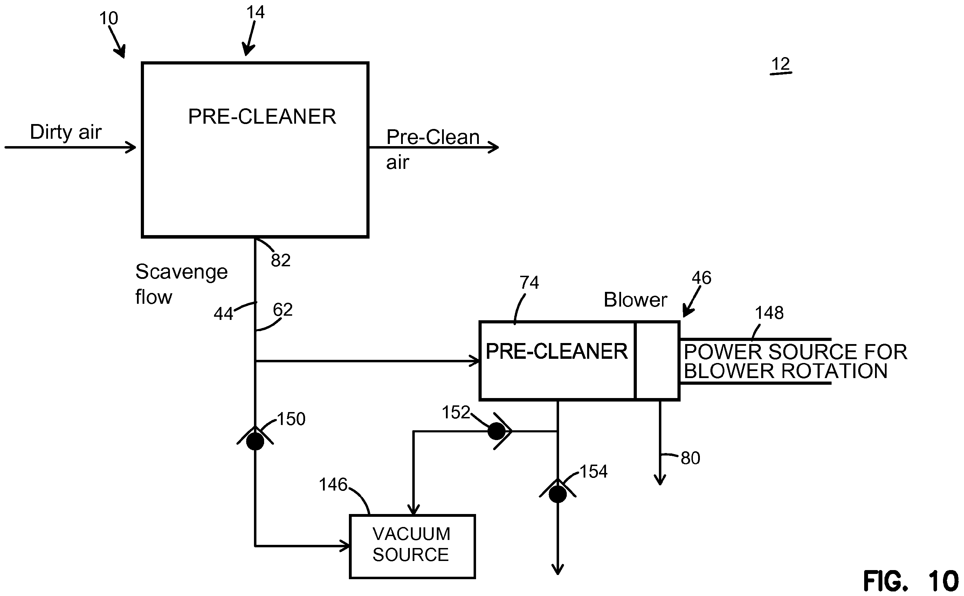

FIG. 10 illustrates the system of FIGS. 8 and 9 including additional check valves 152, 154. The check valves 150, 152, 154 can be used to prevent unwanted backflow.

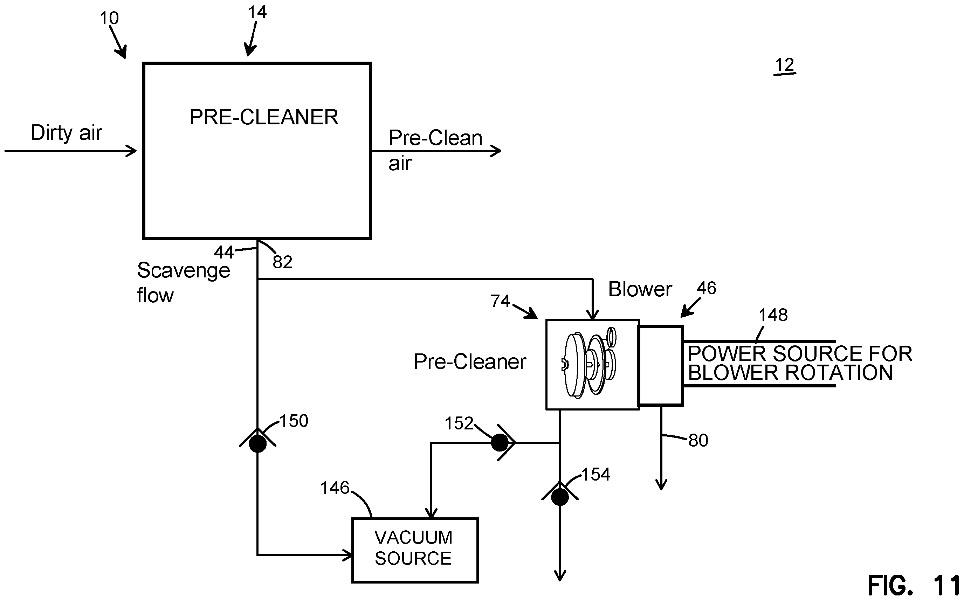

In the system 12 of FIG. 11, an example second pre-cleaner arrangement 74 is illustrated as one method of particle separation that can be used to protect the first vacuum source 46.

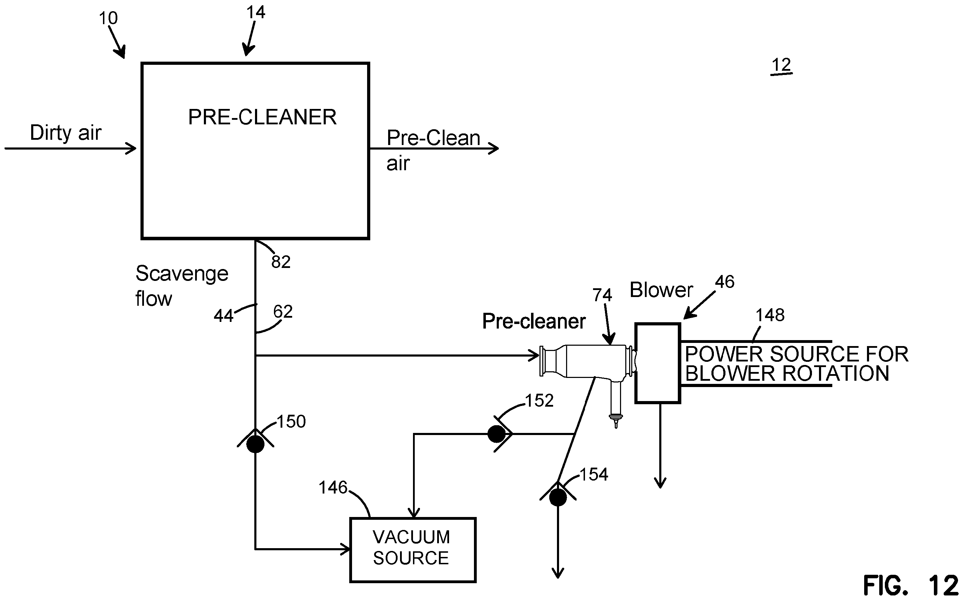

In FIG. 12, another method of particle separation for the second pre-cleaner arrangement 74 is illustrated.

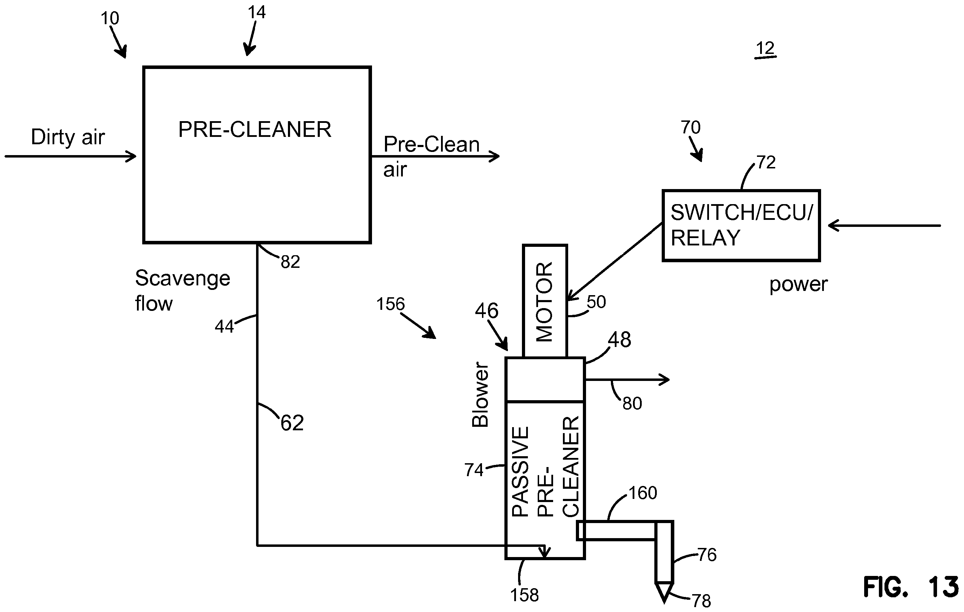

In FIG. 13, a vertical scavenge arrangement is shown at 156. The vertical arrangement 156 can further protect the first vacuum source 46 and help remove particles and liquid, by way of its orientation. That is, because the second pre-cleaner arrangement 74 is vertically oriented, the dust and debris removed by the second pre-cleaner arrangement 74 will drop by gravity to a bottom 158 of the second pre-cleaner arrangement 74. From there, the dust will collect in the second drop tube 76 and be ejected through the dust ejector valve 78. This arrangement shows a tube 160 connecting the second pre-cleaner arrangement 74 to the drop tube 76. Note that the drop tube 76 is located vertically at the lowest point in the system 12 relative to the exhaust scavenge flow 80 of the first vacuum source 46.

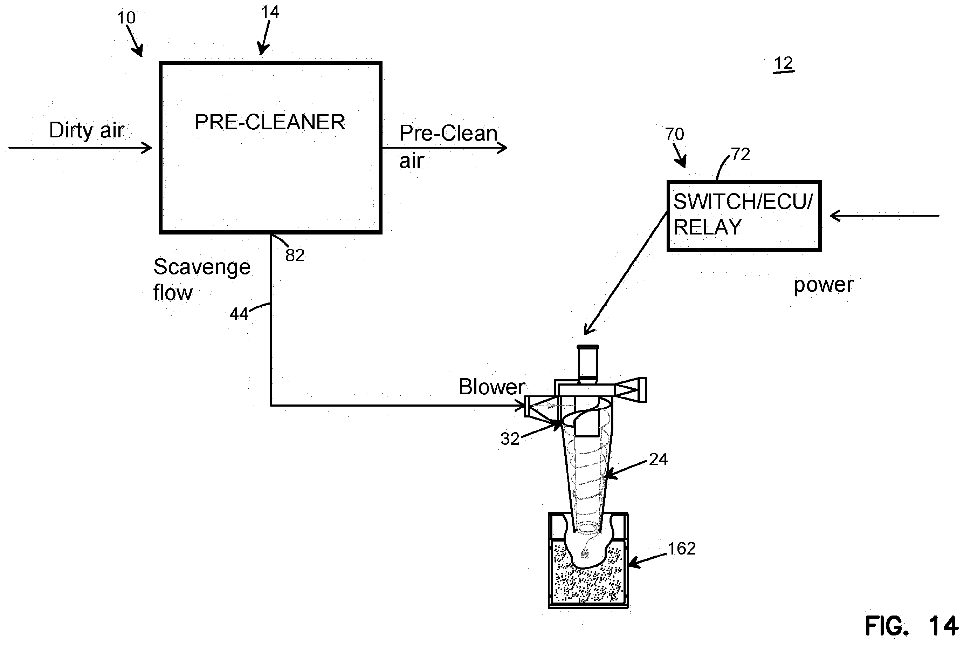

In FIG. 14, the system 12 is schematically illustrated including inertial particle separation tube 24. This embodiment illustrates that the particles from the scavenge system can be collected in a collection chamber 162 rather than being ejected through a dust ejection valve.

The first vacuum source 46 can be controlled by a controlling device 70. The controlling device 70 can be a number of different variations.

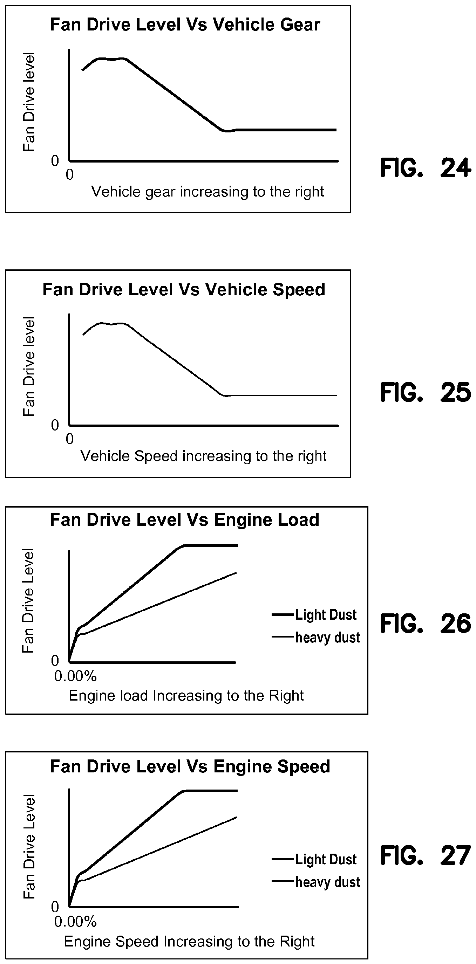

For example, the controlling device 70 can be based on a gear of a vehicle having the air intake arrangement 10. See the graph in FIG. 24. As the gear increases, the fan drive level initially plateaus and then decreases. The decrease is illustrated as a straight (linear) line until flat-lining. It should be noted that instead of a smooth curve in FIG. 24, the curve can be stepped. When the vehicle is in a low gear, it is typically in an off-road, dusty environment. This results is a higher fan drive level for a greater vacuum draw.

In another example, the controlling device 70 can be based on a speed of the vehicle having the air intake arrangement 10. See the graph in FIG. 25. The graph in FIG. 25 is similar to the one in FIG. 24. As the vehicle speed increases, the fan drive level initially plateaus and then decreases. The decrease is shown by a straight (linearly) line until flat-lining. When the vehicle is in low speed, it is typically in an off-road, dusty environment. This results is a higher fan drive level for a greater vacuum draw. It should be noted that instead of a smooth curve in FIG. 25, the curve can be stepped

In another example, the controlling device 70 can be based on an engine load of an engine having the air intake arrangement 10. See the graph in FIG. 26. As the engine load increases, the fan drive level increases. In the example shown, the relationship between engine load and fan drive level is generally linear. In light dust conditions, the fan drive level increases at a faster rate than in heavy dust conditions, as the engine load increases, as demonstrated by the graph. In light dust conditions, the increase of the fan drive level is generally linear as the engine load increases, until peaking and then leveling off. It should be noted that instead of smooth curves in FIG. 26, the curves can be stepped

In another example, the controlling device 70 can be based on an engine speed of an engine having the air intake arrangement 10. See the graph in FIG. 27. The graph in FIG. 27 is similar to the one FIG. 26. As the engine speed increases, the fan drive level increases. In the example shown, the relationship between engine speed and fan drive level is generally linear. In light dust conditions, the fan drive level increases at a faster rate than in heavy dust conditions, as the engine speed increases, as demonstrated by the graph. In light dust conditions, the increase of the fan drive level is generally linear as the engine speed increases, until peaking and then leveling off. Instead of smooth curves in FIG. 27, the curves can be stepped.

In another example, the controlling device 70 can be based on dust concentration in the air intake arrangement 10. In those types of arrangements, there can include a sensor to measure the dust concentration.

Attention is again directed to FIG. 2. In FIG. 2, the first pre-cleaner arrangement is shown at 14. It should be understood that the housing 16 of the first pre-cleaner arrangement 14 can be integral with the primary air cleaner 20.

In other arrangement, such as the arrangement of FIGS. 15-19, the housing 16 of the first pre-cleaner arrangement 14 is separate and upstream of the primary air cleaner 20.

Many different types of blowers 48 can be used for the systems 12 herein. FIG. 21 is an example of one usable blower 48, available from Amtek-Lamb. The blower 48 of FIG. 21 uses three stages 170, 171, 172 to achieve high vacuum at high flow in a small diameter package. It is designed to move filtered air. The blower 48 in FIG. 21 uses a multistage tangential impeller to reach the required vacuum without using very large diameter or high speed impellers.

Useable blowers 48 will provide 5" of vacuum and 100 cfm to satisfy a 10% scavenge flow. This will typically have a power requirements in the 400-500 watt range. Some suitable motors would be sealed motors used for radiator fans. Some of the largest available are between 400-500 watts. Bearing life ranges from 10k-30k hours, in many typical useable systems.

Blower life is a factor in many military applications. The blower 48 can be sized for 1-2" of additional vacuum, then a low efficiency, low pressure drop passive separator can be oriented in front of the blower 48 to separate out larger sand particles. Life may also be improved by using multistage rather than single stage blowers. For example a single stage blower requires a higher blade tip speed to produce the desired vacuum. By putting multiple blower fans in series, a lower tip speed/wear and noise can be achieved.

The above systems can be used in a method of pre-filtering air from air intake system or arrangement 10 of an engine. The method can include drawing air into air flow inlet 18 of the first pre-cleaner arrangement 14. The first pre-cleaner arrangement 14 will include the vacuum flow path 44 and drop tube flow path 62. The method can include removing at least some particulate from the drawn in air using the pre-cleaner region 22 of the first pre-cleaner arrangement 14. The method can further include allowing air with the removed particulate to flow in at least one of the vacuum flow path 44 or drop tube flow path 62 until exhausted from the system.

When power is initiated to the first vacuum source 46, then the step of allowing air with the removed particulate to flow in at least one of the vacuum flow paths 44 or drop tube flow path 62 includes allowing air with the removed particulate to flow in the vacuum flow path 44 and be exhausted at the exhaust scavenge flow 80 by the first vacuum source 46.

When the first vacuum source 46 is not powered, then the step of allowing air with the removed particulate to flow in at least one of the vacuum flow path 44 or drop tube flow path 62 includes having the air with the particulate flow into the drop tube 64.

The method can further include pre-cleaning the air carrying the removed particulate before exhausting it by the first vacuum source 46 by using second pre-cleaner arrangement 74.

The method can further include using second vacuum source 146 on the second pre-cleaner arrangement 74.

In some methods, the step of allowing air with the removed particulate to flow in at least one of the vacuum flow path 44 or drop tube flow path 62 includes connecting the vacuum flow path 44 and drop tube flow path 62 with T-connector 84. The T-connector 84 will be in air flow communication with the housing 16 of the first pre-cleaner arrangement 14.

The methods can include using check valves 92, or 150, 152, 154 in the air intake arrangement 10 to prevent unwanted back flow.

The above are example principles. Many embodiments can be made.

## Claims

1. An air intake arrangement (10) for an air intake system (12) for an engine; the air intake arrangement (10) comprising:
(a) a first pre-cleaner arrangement (14) having a housing (16) with an airflow inlet (18) to receive air to be pre-cleaned; a pre-cleaner region (22) constructed and arranged to remove at least some particulate from the inlet air; the first pre-cleaner arrangement (14) further including a vacuum flow path (44) and a drop tube flow path (62);
(i) the vacuum flow path (44) being in airflow communication with a first vacuum source (46) to selectively put a vacuum draw through the pre-cleaner region (22); and
(ii) the drop tube flow path (62) being in airflow communication with a drop tube (64) to eject particulate removed from the inlet air by the pre-cleaner region (22);
**characterized by**
(b) a check valve (92) in the vacuum flow path (44), upstream of the first vacuum source (46).

2. The air intake arrangement (10) of claim 1 further comprising:
(a) a T-connection (84) providing airflow communication between the vacuum flow path (44) and the drop tube flow path (62).

3. The air intake arrangement (10) of claim 2 wherein:
(a) the T-connection (84) includes a first leg (86), an intersecting second leg (88), and a third leg (90); the first leg (86) and third leg being on opposite sides of the intersecting second leg (88);
(i) the first leg (86) being between the pre-cleaner housing (16) and the second leg (88);
(ii) the second leg (88) of the T-connection (84) being connected to the first vacuum source (46);
(iii) the third leg (90) being connected to the drop tube (64); and
wherein the third leg (90) is longer than the first leg (86).

4. The air intake arrangement (10) according to any one of the preceding claims wherein the first vacuum source (46) includes an electric blower (48).

5. The air intake arrangement (10) according to any one of the preceding claims wherein the first vacuum source (46) includes a hydraulically powered first vacuum source (52).

6. The air intake arrangement (10) according to any one of the preceding claims wherein the first vacuum source (46) includes a belt-driven blower (56).

7. The air intake arrangement (10) according to any one of the preceding claims wherein the first vacuum source (46) is powered by a power takeoff (PTO), or engine, or cam-shaft (58).

8. The air intake arrangement (10) according to any one of the preceding claims wherein, when the intake arrangement is operably oriented, the drop tube (64) is at least at the same vertical position as the first vacuum source (46).

9. The air intake arrangement (10) according to any one of claims 1-7 wherein, when the intake arrangement is operably oriented, the drop tube (64) is at a lower vertical position than the first vacuum source (46).

10. The air intake arrangement (10) according to any one of the preceding claims wherein the first vacuum source (46) is controlled by a controlling device.

11. The air intake arrangement (10) according to claim 10 wherein the controlling device controls the first vacuum source (46) based on a gear of a vehicle having the air intake arrangement (10).

12. The air intake arrangement (10) according to claim 10 wherein the controlling device controls the first vacuum source (46) based on a speed of a vehicle having the air intake arrangement (10).

13. The air intake arrangement (10) according to claim 10 wherein the controlling device controls the first vacuum source (46) based on an engine load of an engine having the air intake arrangement (10).

14. The air intake arrangement (10) according to claim 10 wherein the controlling device controls the first vacuum source (46) based on an engine speed of an engine having the air intake arrangement (10).

15. The air intake arrangement (10) according to claim 10 wherein the controlling device controls the first vacuum source (46) based on dust concentration in the air intake arrangement (10).

## Patentansprüche

1. Lufteinlassanordnung (10) für ein Lufteinlasssystem (12) für einen Motor; wobei die Lufteinlassanordnung (10) aufweist:
(a) eine erste Vorreinigeranordnung (14) mit einem Gehäuse (16) mit einem Luftflusseinlass (18), um vorzureinigende Luft zu empfangen; eine Vorreinigerregion (22), konstruiert und angeordnet, um zumindest einige Schwebstoffe aus der Einlassluft zu entfernen; wobei die erste Vorreinigeranordnung (14) weiterhin einen Vakuumflussweg (44) und einen Fallrohrflussweg (62) aufweist;
(i) wobei sich der Vakuumflussweg (44) in Luftflusskommunikation mit einer ersten Vakuumquelle (46) befindet, um durch die Vorreinigerregion (22) hindurch den Zug eines Vakuums selektiv vorzusehen; und
(ii) wobei sich der Fallrohrflussweg (62) in Luftflusskommunikation mit einem Fallrohr (64) befindet, um von der Vorreinigerregion (22) aus der Einlassluft entfernte Schwebstoffe auszustoßen;
**dadurch gekennzeichnet, dass**
(b) oberhalb der ersten Vakuumquelle (46) in dem Vakuumflussweg (44) ein Rückschlagventil (92) vorgesehen ist.

2. Lufteinlassanordnung (10) nach Anspruch 1, weiterhin aufweisend:
(a) eine T-Verbindung (84), die eine Luftflusskommunikation zwischen dem Vakuumflussweg (44) und dem Fallrohrflussweg (62) zur Verfügung stellt.

3. Lufteinlassanordnung (10) nach Anspruch 2, wobei:
(a) die T-Verbindung (84) einen ersten Strang (86) aufweist, einen kreuzenden zweiten Strang (88), und einen dritten Strang (90); wobei der erste Strang (86) und der dritte Strang auf gegenüberliegenden Seiten des kreuzenden zweiten Stranges (88) liegen;
(i) wobei der erste Strang (86) zwischen dem Vorreinigergehäuse (16) und dem zweiten Strang (88) liegt;
(ii) wobei der zweite Strang (88) der T-Verbindung (84) mit der ersten Vakuumquelle (46) verbunden ist;
(iii) wobei der dritte Strang (90) mit dem Fallrohr (64) verbunden ist; und wobei der dritte Strang (90) länger ist als der erste Strang (86).

4. Lufteinlassanordnung (10) nach einem der vorstehenden Ansprüche, wobei die erste Vakuumquelle (46) ein elektrisches Gebläse (48) aufweist.

5. Lufteinlassanordnung (10) nach einem der vorstehenden Ansprüche, wobei die erste Vakuumquelle (46) eine hydraulisch angetriebene erste Vakuumquelle (52) aufweist.

6. Lufteinlassanordnung (10) nach einem der vorstehenden Ansprüche, wobei die erste Vakuumquelle (46) ein riemengetriebenes Gebläse (56) aufweist.

7. Lufteinlassanordnung (10) nach einem der vorstehenden Ansprüche, wobei die erste Vakuumquelle (46) durch einen Nebenantrieb (PTO), oder einen Motor, oder eine Nockenwelle (58) angetrieben wird.

8. Lufteinlassanordnung (10) nach einem der vorstehenden Ansprüche, wobei sich das Fallrohr (64) zumindest an der gleichen vertikalen Position wie die erste Vakuumquelle (46) befindet, wenn die Einlassanordnung betriebsgemäß orientiert ist.

9. Lufteinlassanordnung (10) nach einem der Ansprüche 1-7, wobei das Fallrohr (64) eine gegenüber der ersten Vakuumquelle (46) niedrigere vertikale Position aufweist, wenn die Einlassanordnung betriebsgemäß orientiert ist.

10. Lufteinlassanordnung (10) nach einem der vorstehenden Ansprüche, wobei die erste Vakuumquelle (46) durch ein Steuergerät gesteuert wird.

11. Lufteinlassanordnung (10) nach Anspruch 10, wobei das Steuergerät die erste Vakuumquelle (46) basierend auf einem Gang eines die Lufteinlassanordnung (10) aufweisenden Fahrzeuges steuert.

12. Lufteinlassanordnung (10) nach Anspruch 10, wobei das Steuergerät die erste Vakuumquelle (46) basierend auf einer Geschwindigkeit eines die Lufteinlassanordnung (10) aufweisenden Fahrzeuges steuert.

13. Lufteinlassanordnung (10) nach Anspruch 10, wobei das Steuergerät die erste Vakuumquelle (46) basierend auf einer Motorbelastung eines die Lufteinlassanordnung (10) aufweisenden Motors steuert.

14. Lufteinlassanordnung (10) nach Anspruch 10, wobei das Steuergerät die erste Vakuumquelle (46) basierend auf einer Motorgeschwindigkeit eines die Lufteinlassanordnung (10) aufweisenden Motors steuert.

15. Lufteinlassanordnung (10) nach Anspruch 10, wobei das Steuergerät die erste Vakuumquelle (46) basierend auf einer Staubkonzentration in der Lufteinlassanordnung (10) steuert.

## Revendications

1. Ensemble d'admission d'air (10) destiné à un système d'admission d'air (12) destiné à un moteur ; l'ensemble d'admission d'air (10) comprenant :
(a) un premier ensemble de pré-épurateur (14) ayant une enceinte (16) avec une admission de flux d'air (18) destinée à recevoir de l'air à pré-épurer ; une zone de pré-épurateur (22) construite et prévue pour éliminer au moins certaines matières particulaires de l'air d'admission ; le premier ensemble de pré-épurateur (14) comprenant en outre un trajet d'écoulement de vide (44) et un trajet d'écoulement de tube de descente (62) ;
(i) le trajet d'écoulement de vide (44) étant en communication de flux d'air avec une première source de vide (46) afin de placer sélectivement un vide dans la zone de pré-épurateur (22) ; et
(ii) le trajet d'écoulement de tube de descente (62) étant en communication de flux d'air avec un tube de descente (64) afin d'éjecter les matières particulaires éliminées de l'air d'admission à l'aide de la zone de pré-épurateur (22) ;
**caractérisé par**
(b) un clapet de retenue (92) dans le trajet d'écoulement de vide (44), en amont de la première source de vide (46).

2. Ensemble d'admission d'air (10) selon la revendication 1, comprenant en outre :
(a) un raccord en T (84) qui assure une communication de flux d'air entre le trajet d'écoulement de vide (44) et le trajet d'écoulement de tube de descente (62).

3. Ensemble d'admission d'air (10) selon la revendication 2, dans lequel :
(a) le raccord en T (84) comprend un premier support (86), un second support d'intersection (88), et un troisième support (90) ; le premier support (86) et le troisième support étant sur les côtés opposés du second support d'intersection (88) ;
(i) le premier support (86) étant entre l'enceinte de pré-épurateur (16) et le second support (88) ;
(ii) le second support (88) du raccord en T (84) étant relié à la première source de vide (46) ;
(iii) le troisième support (90) étant relié au tube de descente (64) ; et
dans lequel le troisième support (90) est plus long que le premier support (86).

4. Ensemble d'admission d'air (10) selon l'une quelconque des revendications précédentes, dans lequel la première source de vide (46) comprend un ventilateur électrique (48).

5. Ensemble d'admission d'air (10) selon l'une quelconque des revendications précédentes, dans lequel la première source de vide (46) comprend une première source de vide hydraulique (52).

6. Ensemble d'admission d'air (10) selon l'une quelconque des revendications précédentes, dans lequel la première source de vide (46) comprend un ventilateur à courroie (56).

7. Ensemble d'admission d'air (10) selon l'une quelconque des revendications précédentes, dans lequel la première source de vide (46) est alimentée par une prise de force (PTO), ou un moteur, ou un arbre à came (58).

8. Ensemble d'admission d'air (10) selon l'une quelconque des revendications précédentes, dans lequel, lorsque l'ensemble d'admission est orienté de manière exploitable, le tube de descente (64) est au moins dans la même position verticale que la première source de vide (46).

9. Ensemble d'admission d'air (10) selon l'une quelconque des revendications 1 à 7, dans lequel, lorsque l'ensemble d'admission est orienté de manière exploitable, le tube de descente (64) se trouve dans une position verticale inférieure à la première source de vide (46).

10. Ensemble d'admission d'air (10) selon l'une quelconque des revendications précédentes, dans lequel la première source de vide (46) est contrôlée par un dispositif de commande.

11. Ensemble d'admission d'air (10) selon la revendication 10, dans lequel le dispositif de commande contrôle la première source de vide (46) sur la base d'une vitesse d'un véhicule ayant l'ensemble d'admission d'air (10).

12. Ensemble d'admission d'air (10) selon la revendication 10, dans lequel le dispositif de commande contrôle la première source de vide (46) sur la base d'une vitesse d'un véhicule ayant l'ensemble d'admission d'air (10).

13. Ensemble d'admission d'air (10) selon la revendication 10, dans lequel le dispositif de commande contrôle la première source de vide (46) sur la base d'une charge de moteur d'un moteur ayant l'ensemble d'admission d'air (10).

14. Ensemble d'admission d'air (10) selon la revendication 10, dans lequel le dispositif de commande contrôle la première source de vide (46) sur la base d'une vitesse de moteur d'un moteur ayant l'ensemble d'admission d'air (10).

15. Ensemble d'admission d'air (10) selon la revendication 10, dans lequel le dispositif de commande contrôle la première source de vide (46) sur la base d'une concentration en poussière dans l'ensemble d'admission d'air (10).
